# EUROPÄISCHE PATENTSCHRIFT

(11) **EP 0 402 828 B1**
(45) Veröffentlichungstag und Bekanntmachung des Hinweises auf die Patenterteilung: **14.12.1994**
(21) Anmeldenummer: 90111005.6
(22) Anmeldetag: 11.06.1990
(51) Int. Cl.: G02B 7/34

(54) **Autofocussystem für Fotoapparate**
Auto-focus system for cameras
Système de mise au point automatique pour des appareils de photographie

(30) Priorität: 14.06.1989 DE 3919480; 29.08.1989 DE 3928549
(43) Veröffentlichungstag der Anmeldung: 19.12.1990
(73) Patentinhaber: Wagner, Gert, 22303 Hamburg (DE)
(72) Erfinder: Wagner, Gert, 22303 Hamburg (DE)
(74) Vertreter: Brose, D. Karl, Dipl.-Ing.

(56) Entgegenhaltungen:
- EP-A- 0 179 455
- DE-A- 3 211 234
- DE-A- 3 637 742
- DE-A- 3 803 305
- US-A- 3 055 975
- PATENT ABSTRACTS OF JAPAN, Band 9, Nr. 208 (E-338)[1931], 24. August 1985;& JP-A-60 72 382

## Beschreibung

Die Erfindung betrifft ein Autofocussystem für Fotoapparate mit einem in einem Bildschacht angeordneten Vollspiegel, mit einem das durch das Objektiv erfaßte Objekt in einem Autofocusmeßfeld in zwei Strahlengänge aufteilenden Separator, einem Detektor zur Erfassung der Entfernung des Objekts von der Filmebene und mit einer die Schärfeneinstellung am Objektiv steuernden Steuerung, welche über eine Antriebsvorrichtung den Focus des Objektivs entsprechend der gemessenen Entfernung einstellt.

Derartige Autofocussysteme sind allgemein bekannt. Die meisten der bis heute verwendeten Autofocussysteme weisen ein Autofocusmeßfeld auf, welches vergleichsweise klein ist und im Zentrum des Bildes liegt. Demzufolge muß sich auch das Objekt, auf das die Schärfe eingestellt werden soll, genau in der Bildmitte befinden. Bei einigen technisch aufwendigeren Fotoapparaten läßt sich dieser Nachteil dadurch umgehen, daß man die eingestellte Schärfe speichern kann, was bei einigen Systemen nur für die Dauer einer einzigen Aufnahme möglich ist. Nur unter Anwendung dieser zusätzlichen Speicherung kann man das Objekt auch außerhalb der Bildmitte positionieren und erst dann auslösen. Diese Lösung ist jedoch nur anwendbar, wenn sich das Objekt nicht bewegt, also im einmal ermittelten Schärfebereich bleibt. Anderenfalls muß der gesamte Vorgang der Schärfennachstellung wiederholt werden, was beispielsweise bei sich konstant bewegenden Objekten überhaupt nicht möglich ist. Die Praxis hat somit gezeigt, daß sowohl eine präzise Lichtmessung mittels einem Spot-Lichtmeßsystem wie auch eine zuverlässige Schärfeneinstellung mittels des Autofocussystems nur unter der Voraussetzung unkompliziert möglich ist, daß das aufzunehmende Objekt wenig Bewegung aufweist und exakt in der Bildmitte angeordnet ist. Eine freiere Bildgestaltung ist mit Hilfe der Speicherung der Meßwerte möglich, wobei bei bewegten Objekten dieser Kompromiß nicht weiterhilft, so daß sämtliche Vorteile automatischer Licht- und Schärfemessung aufgehoben sind.

Ein solches Autofocussystem, von dem hier als nächstgelegenen Stand der Technik ausgegangen werden soll, ist aus der DE-A-38 03 305 bekannt. Diese Druckschrift zeigt ein Autofocussystem gemäß dem Oberbegriff des Anspruchs 1. Dabei sind zusätzliche Hilfs-Autofocussysteme in den Randbereichen vorgesehen. Damit soll das Problem des mittig angeordneten Autofocusmeßfelds gelöst werden. Es ist dabei aber notwendig, drei Autofocussysteme zu verwenden, was sehr aufwendig ist. Außerdem ist eine freie Verschiebung des Autofocusmeßfelds nicht möglich.

Weiterhin ist es gemäß der DE-A-32 11 234 bekannt, ein Autofocussystem so auszugestalten, daß von dem Kamerabediener beispielsweise über ein Wendelrad die Größe des der Autofocusierung dienenden Bildbereiches eingestellt werden kann, wobei die Größe dieses Bereiches auch im Sucher angezeigt wird. Auch hier ist es jedoch nur möglich, einen Bereich um die Mitte des Sucherbildfeldes herum auszuwählen. Dieser Bereich kann nicht verschoben, sondern nur vergrößert oder verkleinert werden. Auch damit kann ein außerhalb der Suchermitte aufzunehmendes Objekt nur unzureichend oder mit großen Schwierigkeiten für den Kamerabediener automatisch scharf eingestellt werden.

Eine Einrichtung zum Scharfstellen von Videobildern ist aus der EP-A-0 179 455 bekannt. Gemäß dieser Entgegenhaltung können bestimmte, von der Bedienungskraft auswählbare Teile des Videobildes zur Scharfeinstellung ausgewählt werden. Diese Auswahl erfolgt durch entsprechende Austastung des Videosignals. Die nicht ausgetasteten Teile des Videosignals werden dann ebenfalls einer Maximierung der Hochfrequenzkomponenten zur Erzielung einer optimalen Bildschärfe unterzogen.

Ausgehend von diesem Hintergrund liegt der Erfindung die Aufgabe zugrunde, ein Autofocussystem in Verbindung mit einem Spot-Lichtmeßsystem dahingehend zu verbessern, daß die Effizienz des Autofocussystems und der Belichtungsmessung basierend auf einem sehr kleinen Bildausschnitt in jeder Situation nutzbar ist, unabhängig davon, wo sich das scharf zu stellende Objekt innerhalb des Vollbilds befindet.

Diese Aufgabe wird erfindungsgemäß durch die Merkmale des Anspruchs 1 gelöst.

Es ist offensichtlich, daß hierdurch dem Fotografen alle Möglichkeiten einer individuellen Bildgestaltung unter voller Nutzung aller Vorzüge des Autofocussystems bzw. der Spot-Lichtmessung gegeben werden, da sich aufgrund dieses Lösungsvorschlags das Meßfeld für den Autofocus bzw. für die Spot-Lichtmessung in freier Gestaltung mit dem aufzunehmenden Objekt oder dem wichtigsten Objekt eines Bildes zur Deckung bringen läßt.

Bei einer besonders bevorzugten Ausführungsform nach der Erfindung ist der Meßpunkt der Spot-Lichtmessung der Kamera zusammen mit dem Autofocusmeßfeld verschiebbar. Hierdurch wird erreicht, daß das Hauptmotiv unabhängig von der durch den Fotografen gewählten Bildgestaltung immer und in jeder Situation scharf und auch korrekt belichtet wird.

Die bisher angewandten Autofocussysteme, unabhängig davon, ob sie auf der Infrarotmessung oder auf Zwei-Linsensystemen beruhen, sind immer auf ein kleines oder größeres Feld exakt in der Bildmitte fixiert. Das erfindungsgemäße flexible Autofocussystem gibt die Möglichkeit, den Autofocusmeßbereich und gegebenenfalls auch den Bereich der Spot-Lichtmessung auf jede Stelle innerhalb des gesamten Bildausschnitts zu positionieren. Zur praktischen Ausführung dieses Prinzips gibt es zwei grundsätzliche Lösungen, nämlich einmal eine mechanische Lösung und einmal eine elektronische Lösung.

Im einzelnen kann daher die Erfindung dadurch weitergebildet werden, daß die Verschiebung des Autofocusmeßfelds mechanisch erfolgt, daß die das Doppelbild des Separators empfangende und gegebenenfalls den Meßpunkt der Spot-Lichtmessung enthaltende Meßeinheit entlang zweier zueinander senkrecht stehender Hauptachsen verschiebbar oder um ihre Achse verschwenkbar ist. In beiden Fällen wird die Meßeinheit jeweils exakt innerhalb des Bildes dort positioniert, wo die Schärfe und mit ihr auch die korrekte Belichtung gewünscht wird. Es wird folglich der gesamte kompakte Block der Autofocus- und Spot-Messung innerhalb des Bildausschnittes mechanisch bewegt und damit in der zu messenden Stelle fixiert. Die Bewegung kann entweder mechanisch über Rändelräder od. dgl. mit einem geeigneten Transportsystem erfolgen oder auf elektromechanischem Wege mit Hilfe von Wippschaltern und Elektromotoren, wobei bevorzugt das mechanische Transportsystem mit einem Anzeigepunkt auf der Mattscheibe bei Spiegelreflexkameras oder im Sucherfeld bei Sucherkameras gekoppelt ist, welcher innerhalb des Bildausschnitts die Lage des Autofocusmeßfelds anzeigt. Durch einen derartigen Anzeigepunkt, welcher bevorzugt optisch markant und möglichst mehrfarbig ausgebildet ist, wird für den Fotografen unübersehbar signalisiert, an welcher Stelle des Bildausschnitts die Messung erfolgt.

Ferner ist es bevorzugt, daß der gesamte Bildausschnitt vor der Meßeinheit optisch verkleinert wird und zwar möglichst unmittelbar vor den Meßzellen, so daß die zur Positionierung des Meßblocks erforderlichen Bewegungen innerhalb eines eng begrenzten Raums stark reduziert werden können.

Ein alternatives, besonders bevorzugtes Lösungsprinzip für die praktische Ausführung des Grundgedankens der Erfindung besteht darin, daß die Verschiebung des Autofocusmeßfeldes auf elektronischem Wege erfolgt. Die elektronische Lösung nutzt ebenfalls das vorhandene Meßverfahren, bei welchem das Bild über zwei Linsen geteilt bzw. verdoppelt wird. Bevorzugt wird jedoch hierbei nicht mehr das Teilbild des Autofocusmeßfeldes, sondern der gesamte Bildausschnitt als Vollbild im Separator verdoppelt, wobei ein Mikroprozessor vorgesehen ist, welcher eine auswählbare Teilfläche innerhalb des Vollbilds mißt. Der Mikroprozessor mißt hierbei diejenige Teilfläche, welche je nach Lage des Hauptmotivs gemessen werden soll.

Bei einer besonders bevorzugten Ausführungsform nach der Erfindung werden die verdoppelten Vollbilder des Separators auf ein CCD-Doppelchip übertragen und es werden die Teilflächen durch den Mikroprozessor auf den CCD-Chips des Doppelchips synchron angesteuert.

Im einzelnen ist es hierbei ferner bevorzugt, daß das Vollbild zusätzlich auf ein Lichtstärke-CCD-Chip übertragen wird und daß eine Teilfäche des Lichtstärke-CCD-Chips durch den Mikroprozessor auswählbar ist.

Hierbei ist es besonders vorteilhaft, daß die Ansteuerung der Teilfläche des Lichtstärke-CCD-Chips synchron mit der Ansteuerung der Teilflächen des CCD-Doppelchips erfolgt. Durch diese Ausführungsform wird sichergestellt, daß die Spot-Lichtmessung in dem Bereich erfolgt, welcher für die Schärfeeinstellung ausgewählt wurde, da es sich hier üblicherweise um den Hauptbestandteil des Motivs handelt. Es sind selbstverständlich auch Ausführungsformen möglich, bei denen bewußt die dem Meßpunkt der Spot-Lichtmessung entsprechende Teilfläche abweichend von dem für die Schärfeeinstellung ausgewählten Bereich festzulegen, sollte dies für die bildliche Gestaltung als vorteilhaft erachtet werden. Zu diesem Zweck kann einfach vorgesehen werden, die Verschiebung des Meßpunktes der Spot-Lichtmessung von der Verschiebung des Autofocusmeßbereichs abzukoppeln.

Bei einer besonders bevorzugten Ausführungsform nach der Erfindung sind durch den Mikroprozessor mehrere aneinandergrenzende Teilflächen zur Änderung der Größe und Gestalt des Autofocusmeßfelds und gegebenenfalls des Meßpunkts der Spot-Lichtmessung auswählbar. Hierdurch ist es möglich, nicht nur die weiter unten beschriebene einfache Änderung der Größe des Meßfeldes vorzunehmen, sondern es läßt sich das Meßfeld beispielsweise der speziellen Gestalt eines Motives anpassen, so daß man bei schmalen hohen Objekten ein schmales, hochkantstehendes Rechteck und bei niedrigen, breiten Objekten ein schmales, liegendes Rechteck als Gestalt wählen kann, um sowohl die Lichtmessung als auch die Schärfeneinstellung über die Gesamterstreckung des Motivs sicherzustellen.

Bevorzugt ist es bei dieser Ausführungsform ebenfalls, daß der Bildausschnitt optisch verkleinert wird, um dadurch zu einer platzsparenden Konstruktion zu gelangen.

Im einzelnen ist es ferner vorteilhaft, daß Leuchtdioden oder ein Lasersystem vorgesehen ist, welche auf der Mattscheibe signalisieren, welcher Bereich des Bildes angemessen wird. Hierdurch ist im Sucher eine optische Kontrolle gegeben, die anzeigt, welche Teilfläche der Mikroprozessor mißt.

Für die Bedienung des Mikroprozessors ist ein Bereichsselektor vorgesehen, welcher beispielsweise als Track-Ball oder als Joy-Stick ausgebildet sein kann.

Bei einer besonders bevorzugten Ausführungsform ist der Auslöser der Kamera mit dem Bereichsselektor kombiniert, derart, daß Schärfepunkteinstellung, Belichtungsmessung und Auslösung mit einem Finger und mit einer Bewegung möglich sind.

Bei einer vorteilhaften Weiterbildung nach der Erfindung wird das Autofocusmeßfeld zusammen mit dem Meßpunkt der Spot-Lichtmessung beim Einschalten der Kamera und/oder beim Loslassen des Bereichsselektors in die Bildmitte zurückgestellt.

Bei einer besonders bevorzugten Ausführungsform ist ferner vorgesehen, daß die Größe des Autofocusmeßfelds variabel ist. Gerade im Nahbereich eines Teleobjektivs kann nämlich ein kleiner Meßbereich zu entscheidenden Fehlern führen. Eine für diesen Zweck vergrößerte Meßfläche würde z.B. bei Portraitfotografien verhindern, daß gegebenenfalls die Nasenspitze noch scharf ist, während die Augen bereits im Unschärfebereich liegen. Weiterhin wäre das Verfolgen eines sich bewegenden Objektes mit einer vergrößerten Meßfläche einfacher und risikofreier.

Im folgenden wird die Erfindung anhand von in den Zeichnungen beispielhaft veranschaulichten Ausführungsformen näher erläutert. Es zeigt:
- Fig. 1: eine Prinzipskizze einer Ausführungsform nach der Erfindung, bei welcher die Verschiebung des Autofocusmeßfelds innerhalb des Bildausschnittes auf elektronischem Wege erfolgt;
- Fig. 2: eine Prinzipskizze, welche den Weg der ein Vollbild repräsentierenden Lichtstrahlen innerhalb der Kamera veranschaulicht;
- Fig. 3: eine prinzipielle Schaltskizze des Autofocussystems nach Fig. 1 und
- Fig. 4: eine Fig. 3 entsprechende Skizze, welche die Verschiebung und Auswahl des Meßbereichs näher erläutert.

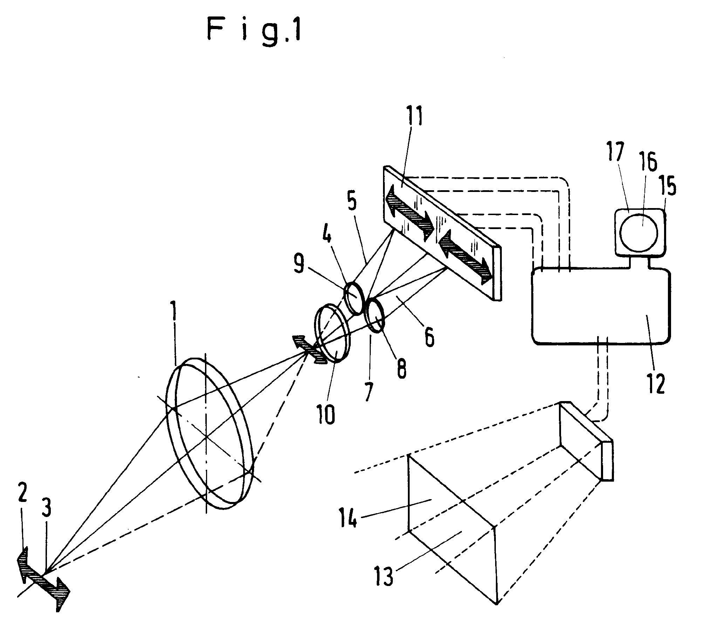

Bei der in Fig. 1 veranschaulichten Ausführungsform wurde für die Entfernungsmessung ein Zweilinsensystem 7 gezeigt, welches das durch das Objektiv 1 erfaßte Objekt 2 in einem Autofocusmeßfeld 3 in zwei Strahlengänge 5 und 6 aufteilt, wobei in der Fig. 1 das Zweilinsensystem einen Separator 4 bildet. Es wird an dieser Stelle darauf hingewiesen, daß sich die Grundprinzipien vorliegender Erfindung auch auf Systeme anwenden lassen, bei denen die Entfernungsmessung nach dem Infrarotprinzip erfolgt.

Bei der in Fig. 1 veranschaulichten Ausführungsform wird das Bild über die beiden dargestellten Linsen 8 und 9 verdoppelt, wobei im Gegensatz zum Stand der Technik kein Teilbild, sondern der gesamte Bildausschnitt benutzt wird. Der gesamte Bildausschnitt wird aus Platzgründen mittels eines zwischengeschalteten Linsensystems 10 optisch verkleinert. Aus der Zusammenarbeit des Separators 4 mit einem Doppelbild CCD 11 ergibt sich die Entfernung zwischen dem Objekt 2 und der in Fig. 1 nicht dargestellten Filmebene, wobei ein Mikroprozessor 12 innerhalb des Vollbildes eine Teilfläche auswählt, in welcher die Messung erfolgt. Als Teilfläche wird diejenige ausgewählt, welche effektiv nach Willen des Fotografen gemessen werden soll. Simultan dazu zeigen Leuchtdioden oder ein Lasersystem auf der Mattscheibe 13, welche in ihrem Umriß den gesamten Bildausschnitt 14 symbolisiert, des Fotoapparates an, welcher Bereich des Bildes gemessen wird. Der Mikroprozessor 12 wird bei der in Fig. 1 veranschaulichten Ausführungsform als AF-Selektiv-Prozessor bezeichnet.

Die Bedienung des Mikroprozessors 12 erfolgt über einen Bereichsselektor 15, welcher beispielsweise in Form eines Track-Balls 16 oder eines Joy-Sticks ausgebildet sein kann. Wie durch den in dem Bereichsselektor 15 eingezeichneten Kreis angedeutet, ist bevorzugt der Auslöser 17 in die Funktion dieses Teiles integriert, so daß Schärfepunkteinstellung, Belichtungsmessung und Auslösung mit einem Finger und einer Bewegung möglich sind.

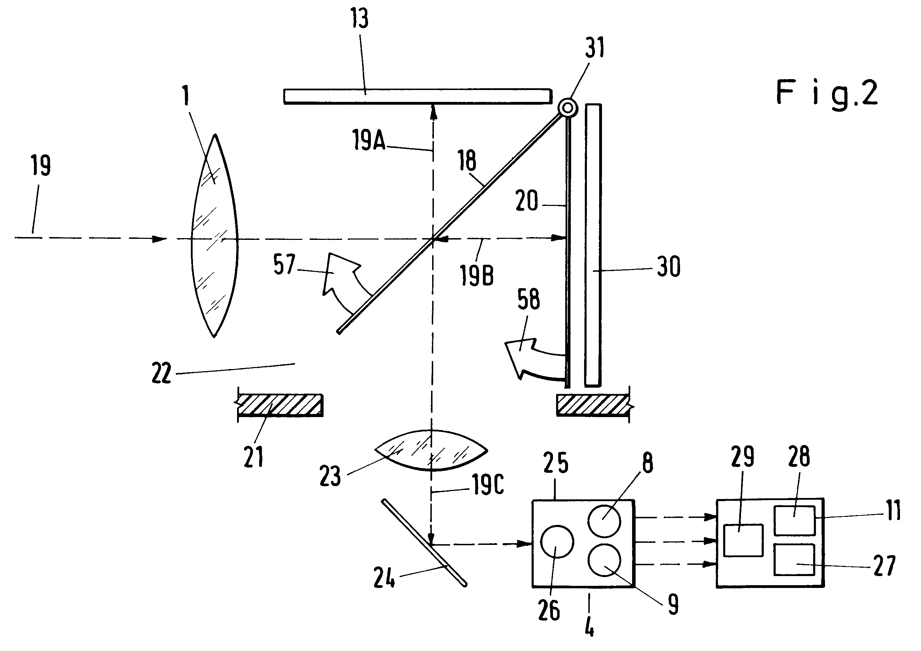

Die Prinzipskizze gemäß Fig. 2 veranschaulicht den Gang der den gewählten Bildausschnitt repräsentierenden Lichtstrahlen durch die Kamera.

Wie veranschaulicht, weist die Kamera einen ersten Klappspiegel 18 auf, welcher als halbtransparenter Spiegel ausgebildet ist. Der Lichtstrahl 19 trifft durch das Objektiv 1 auf den Klappspiegel 18 auf, wobei ein Teil 19A des Lichtes 19 auf die Mattscheibe 13 des Suchers geleitet wird und dort den gewählten Bildausschnitt abbildet. Ein zweiter Teil 19B des Lichtes 19 wird aufgrund der halbtransparenten Natur des Klappspiegels 18 auf einen dahinter liegenden Vollspiegel 20 geleitet, von wo es zurück auf die Rückseite des beidseitig verspiegelten Klappspiegels 18 reflektiert wird. Durch die Rückseite des Klappspiegels 18 wird der Lichtstrahl 19B nach unten in das Kameragehäuse 21 unterhalb des Bildschachtes 22 reflektiert.

Unterhalb des Bildschachtes 21 ist eine Verkleinerungslinse 23 vorgesehen, durch welche der gesamte Bildausschnitt verkleinert wird und die verkleinerte Abbildung, welche durch den Lichtstrahl 19C repräsentiert wird, wird durch einen weiteren Spiegel 24 abgelenkt und einem Linsentriplet 25 zugeleitet.

Das Linsentriplet 25 enthält die bereits beschriebene, den Separator 4 bildende Doppellinse 8, 9 und eine einzelne, der Lichtmessung zugeordnete Linse 26.

Die Doppellinse 28, 29 des Separators 4 im Linsentriplet 25 projeziert zwei getrennte Vollbilder auf ein CCD-Doppel-Chip, welches zwei getrennte CCD-Chips 27 und 28 enthält und dem Autofocusmeßsystem zugeordnet ist, wobei die CCD-Chips 27, 28 das unter Bezugnahme auf Fig. 1 erwähnte Doppelbild-CCD bilden.

Durch die der Lichtmessung zugeordnete Einzellinse 26 wird gleichzeitig das Vollbild auf ein Lichtstärke-CCD-Chip 29 übertragen.

Der Vollständigkeit halber wird noch darauf hingewiesen, daß der Klappspiegel 18 und der Vollspiegel 20 in einem gemeinsamen Scharnier 31 schwenkbar gelagert sind und im Falle der Auslösung beide kurzzeitig nach oben in Richtung der Mattscheibe 13 verschwenkt werden, um den Zugang zur Filmebene 30 freizugeben, wie dies durch die Pfeile 57 und 58 in Fig. 2 angedeutet ist. Nach der Auslösung kehren die Spiegel 18 und 20 in ihre in Fig. 2 veranschaulichte Lage zurück, wobei dieser Vorgang in der üblichen Weise derartig schnell erfolgt, daß dies im Sucher der Kamera kaum wahrnehmbar ist.

Zusammenfassend kann nun an dieser Stelle festgehalten werden, daß das Lichtstärke-Chip 29 und die CCD-Chips 27, 28 des CCD-Doppel-Chips je den vollständigen Bildausschnitt empfangen.

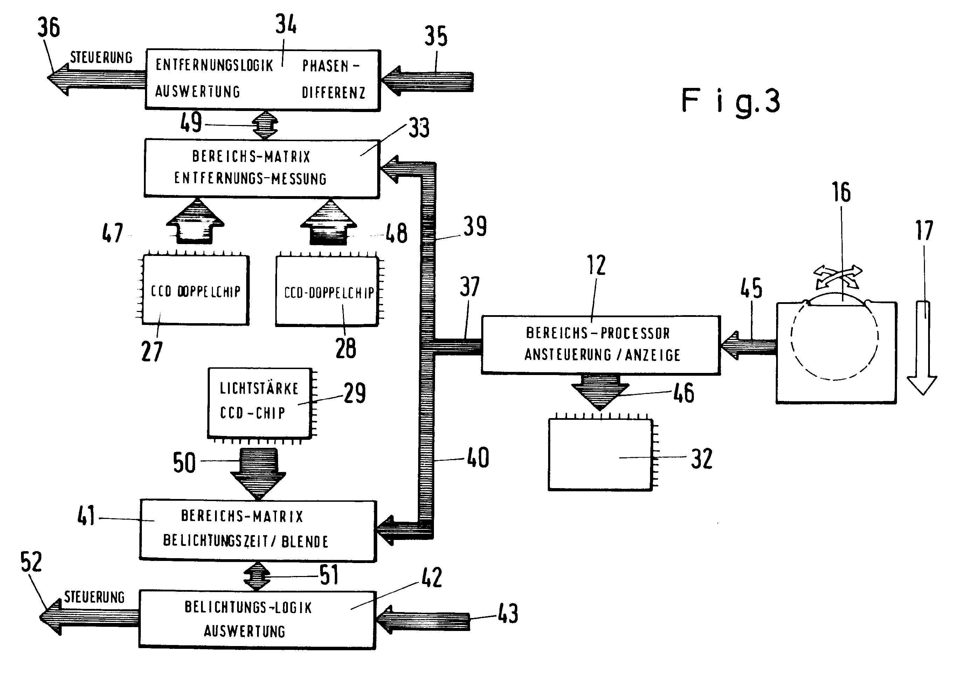

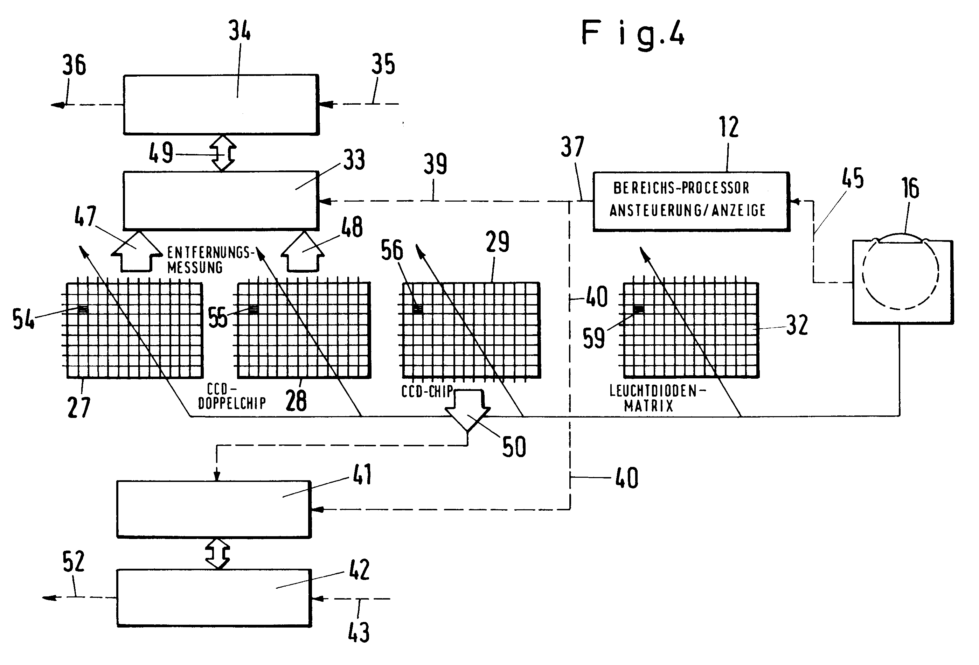

Unter Bezugnahme auf die Fig. 3 und 4 wird nun die Verschiebung des Autofocusmeßfelds und des Meßpunkts der Spot-Lichtmessung näher erläutert.

Wie in Fig. 3 gezeigt, ist der mit dem Auslöser 17 gekoppelte Track-Ball 16 derart angeordnet, daß die am Track-Ball 16 durchgeführten Dreh- und Rollbewegungen in Impulse umgesetzt werden, welche als Signal 45 dem als Bereichsprozessor bezeichneten Mikroprozessor 12 zugeleitet werden. Über dieses Signal werden simultan auf allen drei CCD-Chips 27, 28 und 29 und zusätzlich auf einer Leuchtdiodenmatrix 32 im Kamerasucher Teilflächen aktiviert, welche der Lage und Größe der zu messenden Fläche entsprechen und hierdurch gleichzeitig im Sucher angezeigt werden.

Wie in Fig. 3 gezeigt, dient ein Signal 46 zur entsprechenden Aktivierung der Leuchtdiodenmatrix 32. Das den Mikroprozessor 12 als Ausgangssignal 37 verlassende Signal wird in zwei getrennte Signale 39 und 40 aufgeteilt, von denen das Signal 39 der Bereichsmatrix 33 der Entfernungsmessung zugeleitet wird. Über die Bereichsmatrix 33 werden die über den Track-Ball 16 auf den CCD-Doppel-Chip ausgewählten Teilflächen mittels der Signale 47 und 48 ausgewertet und durch ein Signal 49 der Entfernungslogikauswertung 34 zugeleitet, welcher noch zusätzliche Informationen von der Kamera-CPU, wie Messbereichsgrößen und ähnliche Varianten, in einem Signal 35 zugeleitet werden. Das Signal 49 enthält hierbei die Werte der Entfernungsmessung bezogen auf den auf dem CCD-Doppel-Chip 27, 28 ausgewählten Bereich, so daß das letztlich zur Steuerung der Entfernungseinstellung dienende Signal 36 auf das ausgewählte Autofocusmeßfeld bezogen ist.

Das von dem Mikroprozessor 12 zur Bereichsmatrix 41 der Belichtungsmessung geleitete Signal wird zusammen mit dem Signal 50 vom Lichtstärke-CCD-Chip verarbeitet, wobei das Signal 50 auf den auf dem Lichtstärke-CCD-Chip ausgewählten Meßbereich bezogen ist.

Die in der Bereichsmatrix 41 der Lichtmessung erfolgte Bearbeitung zur Ermittlung einer Belichtungszeit oder Blende führt zu einem Signal 51, welches der Belichtungslogik 42 zugeleitet wird. Die Belichtungslogik empfängt zusätzlich ein Signal 43, welches Informationen von der Kamera-CPU, die beispielsweise verschiedene Meßmethoden, wie Spot, Integral usw., enthält, so daß das letztliche Steuersignal 52 für die Einstellung der Belichtungszeit und Blende zusammen mit den anderen Variablen ausschließlich auf den auf dem Lichtstärke-CCD-Chip ausgewählten Bereich bezogen ist.

Fig. 4 zeigt in weiterer Ausgestaltung des Schaubilds gemäß Fig. 3 nochmals die Ansteuerung der verschiedenen CCD-Chips zusammen mit der Leuchtdiodenmatrix 32.

Wie gezeigt, wird zusätzlich zu dem Signal 45 an dem Mikroprozessor 12 jedes der CCD-Chips über den Track-Ball 16 angesteuert, so daß simultan und synchron auf den CCD-Chips 27, 28 des Doppelbild-CCD 11 und auf dem CCD-Chip 29 der Spot-Lichtmessung ein Meßbereich hinsichtlich seiner Lage und Größe ausgewählt wird, wie er durch die Teilflächen 54, 55 und 56 symbolisiert ist. Gleichzeitig wird an entsprechender Stelle der Leuchtdiodenmatrix 32 ebenfalls durch simultane und synchrone Ansteuerung eine Teilfläche 59 angezeigt, deren Lage und Größe den Teilflächen 54, 55 und 56 entspricht.

Durch entsprechende zusätzliche Signale zu der reinen Verschiebung der Teilflächen innerhalb der das Vollbild repräsentierenden CCD-Chips bzw. der Leuchtdiodenmatrix 32 über den Track-Ball 16 können entsprechende zusätzliche, an die Teilflächen 54, 55, 56 und 59 angrenzende Teilflächen aktiviert werden, um hierdurch die Größe und auch die Gestalt des Autofocusmeßfeldes 3 und des Meßpunkts der Spot-Lichtmessung unter entsprechender Anzeige auf der Leuchtdiodenmatrix 32 zu ändern. So lassen sich beispielsweise zusätzlich zu der Verschiebung der Lage drei oder vier übereinander auf den CCD-Chips 27, 28 und 29 angeordnete Teilflächen aktivieren, um bei abzubildenden Objekten, welche schmal und hoch sind, eine korrekte Messung vorzunehmen. Bei breiten, niedrigen Objekten kann man entsprechende Teilflächen, die nebeneinander liegen, aktivieren. Zur reinen Vergrößerung oder Verkleinerung der jeweiligen Meßfelder werden über zusätzliche Steuerimpulse aus den Teilflächen entsprechend geformte geometrische Figuren zusammengesetzt.

Auf jeden Fall entsprechen die aus den CCD-Chips 27, 28 und 29 zu der weiteren Steuerung gelangenden Signale 47, 48 und 50 dem jeweils gewählten Bereich innerhalb des Vollbilds.

Hinsichtlich der weiteren Einzelbestandteile, wie sie in Fig. 4 dargestellt sind, darf auf die Beschreibung gemäß Fig. 3 verwiesen werden.

Ferner ist bevorzugt, daß jeweils beim Einschalten der Kamera oder auch bei jedem Loslassen des Track-Balls 16 oder des Joy-Sticks die Meßzone des Autofocus und mit dieser auch der Meßpunkt der Spot-Lichtmessung automatisch auf die Bildmitte zurückgestellt werden.

Bei einer abgewandelten Ausführungsform ist es ferner vorgesehen, zusätzlich die Größe des Autofocusmeßfelds zu variieren.

Bei der in der Zeichnung nicht dargestellten mechanischen Verschiebung des Autofocusmeßfelds können bisher angewandte Systeme verwendet werden, ohne daß diese in ihrer Funktion wesentlich modifiziert werden müssen. Lediglich durch Hoch- und Querbewegungen oder sogar durch einfache Schwenks um die eigene Achse des Meßsystems wird die Meßeinheit exakt dort positioniert, wo Schärfe und mit ihr auch die korrekte Belichtung gewünscht werden. Es wird also der gesamte kompakte Block der Autofocus- und Spotmessung innerhalb des Bildausschnitts mechanisch bewegt und damit auf die zu messende Stelle fixiert. Die Bewegung erfolgt mechanisch über Rändelräder mit einem geeigneten Transportsystem oder elektromechanisch mit Hilfe von Wippschaltern und Elektromotoren. An das mechanische Transportsystem ist ein markanter, möglichst mehrfarbiger Punkt auf der Mattscheibe bei Spiegelreflexkameras oder im Sucherfeld bei Sucherkameras angeschlossen, welcher unübersehbar signalisiert, wo die Messung erfolgt. Durch eine optische Verkleinerung des gesamten Bildausschnitts unmittelbar vor den Meßzellen ist es möglich, die oben geschilderten Bewegungen des Meßblocks stark zu reduzieren und innerhalb eines eng begrenzten Raums durchzuführen.

Sämtliche aus der Beschreibung, den Ansprüchen und Zeichnung hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

## Patentansprüche

1. Autofocussystem für mit einem in einem Bildschacht (21) angeordneten Vollspiegel (20) ausgestattete Fotoapparate, mit einem das durch das Objektiv (1) erfaßte Objekt (2) in zwei Strahlengänge aufteilenden Separator (4), einem Detektor (11) zur Erfassung der Entfernung des Objekts (2) von der Filmebene (30) und mit einer die Schärfeneinstellung am Objektiv steuernden Steuerung, welche über eine Antriebsvorrichtung den Focus des Objektivs entsprechend der gemessenen Entfernung einstellt, **dadurch gekennzeichnet**, daß ein Autofocusmeßfeld (3) durch den Benutzer über eine an dem Fotoapparat vorgesehenes Stellorgan (15, 16) innerhalb des gesamten Bildfeldes (14) an jede gewünschte Stelle verschiebbar ist, daß das Bildfeld (14) durch ein Linsentriplet (25) optisch verkleinert abgebildet wird, in welchem zwei Linsen (8, 9) den Seperator (4) bilden und als Spot-Lichtmeßsystem eine dritte Linse (26) einem Lichtstärke-CCD-Chip (29) zur Messung der Lichtstärke zugeordnet ist, wobei die drei Linsen (8, 9, 26) gleichzeitig drei jeweils dem gesamten Bildfeld (14) entsprechende Bilder erzeugen.

2. Autofocussystem nach Anspruch 1, dadurch gekennzeichnet, daß die Verschiebung des Autofocusmeßfelds (3) elektronisch erfolgt und daß ein Mikroprozessor vorgesehen ist, welcher eine auswählbare Teilfläche innerhalb des Bildfeldes mißt.

3. Autofocussystem nach Anspruch 2, dadurch gekennzeichnet, daß die verdoppelten Bildfelder des Separators (4) auf ein CCD-Doppelchip (27, 28) übertragen werden, und daß die Teilflächen (54, 55) durch den Mikroprozessor (12) auf dem CCD-Doppelchip (27, 28) synchron angesteuert werden.

4. Autofocussystem nach Anspruch 2 oder 3, dadurch gekennzeichnet, daß eine Teilfläche (56) des Lichtstärke-CCD-Chips (29) durch den Mikroprozessor (12) auswählbar ist.

5. Autofocussystem nach Anspruch 4, dadurch gekennzeichnet, daß die Ansteuerung der Teilfläche (56) des Lichtstärke-CCD-Chips (29) synchron mit der Ansteuerung der Teilflächen (54 und 55) des CCD-Doppelchips (27, 28) ist.

6. Autofocussystem nach einem der Ansprüche 2 bis 5, dadurch gekennzeichnet, daß mehrere aneinander angrenzende Teilflächen (54, 55, 56) zur Änderung der Größe und Gestalt des Autofocusmeßfeldes (3) und des Meßpunkts der Spot-Lichtmessung durch den Mikroprozessor (12) auswählbar sind.

7. Autofocussystem nach einem der Ansprüche 1 bis 6, dadurch gekennzeichnet, daß eine Leuchtdiodenmatrix (32) vorgesehen ist, welche auf einer Mattscheibe (13) des Fotoapparats den das Autofocusmeßfeld (3) und gegebenenfalls den Meßpunkt der Spot-Lichtmessung repräsentierenden Bereich wiedergibt.

8. Autofocussystem nach einem der Ansprüche 1 bis 6, dadurch gekennzeichnet, daß ein Lasersystem vorgesehen ist, welches auf einer Mattscheibe (13) des Fotoapparats anzeigt, welcher Bereich des Bildfeldes gemessen wird.

9. Autofocussystem nach einem der Ansprüche 2 bis 8, dadurch gekennzeichnet, daß für die Bedienung des Mikroprozessors (12) ein Bereichsselektor (15) vorgesehen ist, und daß der Bereichsselektor (15) als Track-Ball (16) oder als Joy-Stick ausgebildet ist.

10. Autofocussystem nach Anspruch 9, dadurch gekennzeichnet, daß ein Auslöser (17) des Fotoapparats mit dem Bereichsselektor (15) kombiniert ist, derart, daß Schärfepunkteinstellung, Belichtungsmessung und Auslösung mit einem Finger und mit einer Bewegung möglich sind.

11. Autofocussystem nach einem der Ansprüche 9 oder 10, dadurch gekennzeichnet, daß das Autofocusmeßfeld (3) zusammen mit dem Meßpunkt der Spot-Lichtmessung beim Einschalten des Fotoapparats und/oder bei Loslassen des Bereichsselektors (15) in die Mitte des Bildfeldes zurückgestellt wird.

12. Fotoapparat mit einem Autofocussystem nach einem der Ansprüche 1 bis 11, dadurch gekennzeichnet, daß ein halbtransparenter Klappspiegel (18) vor einem Vollspiegel (20) im Bildschacht (22) angeordnet ist, daß der halbtransparente Klappspiegel (18) beidseitig verspiegelt ist, und daß unterhalb des Bildschachtes (22) im Kameragehäuse (21) ein Spiegel (24) vorgesehen ist, wobei die Anordnung derart getroffen ist, daß ein Teil des durch das Objektiv (1) auf den Klappspiegel (18) treffenden Lichts auf eine Mattscheibe (19) eines Suchers geleitet wird und ein anderer Teil des Lichts auf den dahinter liegenden Vollspiegel (20) geführt wird, von wo es zurück auf die Rückseite des Klappspiegels (18) und nach unten in das Kameragehäuse (21) unterhalb des Bildschachts (22) über den Spiegel (24) zu dem Linsentriplet (25) geleitet wird.

13. Fotoapparat nach Anspruch 12, dadurch gekennzeichnet, daß vor dem Spiegel (24) eine Verkleinerungslinse (23) angeordnet ist.

## Claims

1. Autofocus system for cameras with a fully reflecting mirror (20) arranged in a camera body (21), with a separator (4), dividing the object (2) viewed through the camera lens (1) in two beams, a detector (11) for detecting the distance of the object (2) from the film plane (30) and with a control controlling the focusing of the camera lens, which sets the focus of the camera lens in accordance with the measured distance by means of a driving means, characterized in that an autofocus measuring field (3) is movable by the operator by means of a setting device (15, 16) mounted on the camera within the whole frame (14) to every desired position, that the whole frame (14) is optically reduced reproduced by a triplet of lenses (25), in which two lenses (8, 9) form the separator (4) and as spot light measuring system a third lens (26) corresponds to a luminous intensity CCD chip (29) for measuring the luminous intensity, wherein the three lenses (8, 9, 26), produce simultaneously three pictures, each corresponding to the entire frame (14).

2. Autofocus system according to claim 1, characterized in that the displacement of the autofocus measuring field (3) occurs electronically and that a microprocessor is provided, which measures a specifyable partial area within the whole frame.

3. Autofocus system according to claim 2, characterized in that the duplicated whole frames of the separator (4) are transferred to a CCD double-chip (27, 28), and that the partial areas (54, 55) are actuated synchronously by the microprocessor (12) on the CCD double-chip (27, 28).

4. Autofocus system according to claim 2 or 3, characterized in that a partial area (56) of the luminous intensity CCD chip (29) can be specified by the microprocessor (12).

5. Autofocus system according to claim 4, characterized in that the actuation of the partial area (56) of the luminous intensity CCD chip (29) is synchronous with the actuation of the partial areas (54 and 55) of the CCD double-chip (27, 28).

6. Autofocus system according to one of the claims 2 to 5, characterized in that a plurality of adjacent partial areas (54, 55, 56) can be specified by the microprocessor (12) to alter the size and form of the autofocus measuring field (3) and of the metering point of the spot meter.

7. Autofocus system according to one of the claims 1 to 6, characterized in that a light-emitting diode matrix (32) is provided which indicates the area representing the autofocus measuring field (3), and, if necessary, the metering point of the spot meter on a focusing screen (13) of the camera.

8. Autofocus system according to one of the claims 1 to 6, characterized in that a laser system is provided which indicates on a focusing screen (13) of the camera which zone of the frame is being measured.

9. Autofocus system according to one of the claims 2 to 8, characterized in that a zone selector (15) is provided to operate the microprocessor (12), and that the zone selector (15) is in the form of a track ball (16) or a joystick.

10. Autofocus system according to claim 9, characterized in that the camera's shutter release (17) is combined with the zone selector (15) such that focusing, light metering and release of the shutter are possible with one finger and one movement.

11. Autofocus system according to one of claims 9 or 10, characterized in that the autofocus measuring field (3) together with the metering point of the spot meter are reset to the centre of the frame when the camera is switched on and/or when the zone selector (15) is released.

12. Camera with an autofocus system according to one of claims 1 to 11, characterized in that a semi-transparent hinged mirror (18) is located before a fully reflecting mirror (20) in the image path (22), that the semi-transparent hinged mirror (18) is silvered on both faces and that a mirror (24) is located under the image path (22) in the camera body (21) where the configuration is designed such that part of the light striking the hinged mirror after passing through the camera lens (1) is directed onto a focusing screen (19) of a viewfinder and another part of the light is directed onto the fully reflecting mirror (20) behind this from where it is reflected onto the rear of the hinged mirror (18) and downwards into the camera body (21) below the image path (22) via the mirror (24) to the triplet of lenses (25).

13. Camera according to claim 12, characterized in that a reduction lens (23) is located before the mirror (24).

## Revendications

1. Système de mise au point automatique pour appareils photographiques équipés d'un miroir à réflexion totale (20) monté dans un couloir à image (21), comprenant un séparateur (4) qui subdivise l'objet reçu par l'objectif (1) en deux faisceaux, un détecteur (11) pour détecter l'éloignement de l'objet (2) par rapport au plan (30) de la pellicule et une commande qui commande le réglage de la netteté au niveau de l'objectif, qui règle par un dispositif d'entraînement le foyer de l'objectif en fonction de la distance mesurée, caractérisé en ce qu'un champ de mesure de mise au point automatique (3) peut être déplacé par l'utilisateur par un organe de réglage (15, 16) prévu dans l'appareil photographique dans toute position désirée à l'intérieur de l'ensemble du champ d'image (14), en ce que le champ d'image (14) est représenté optiquement réduit par une triplet de lentilles (25), dans lequel deux lentilles (8, 9) forment le séparateur (4) et une troisième lentille (26) servant de système de mesure par spot lumineux est associé à une puce CCD d'intensité lumineuse (29) pour mesurer l'intensité de la lumière, les trois lentilles (8, 9, 26) produisant simultanément trois images correspondant respectivement à l'ensemble du champ d'image (14).

2. Système de mise au point automatique selon la revendication 1, caractérisé en ce que le déplacement du champ de mesure de mise au point automatique (3) est réalisé électroniquement et en ce qu'il est prévu un microprocesseur qui mesure une surface partielle sélectionnable à l'intérieur du champ d'image.

3. Système de mise au point automatique selon la revendication 2, caractérisé en ce que les champ d'image doublés du séparateur (4) sont transmis à une double puce CCD (27, 28) et en ce que les surfaces partielles (54, 55) sont excitées en synchronisme par le microprocesseur (12) sur la double puce CCD (27, 28).

4. Système de mise au point automatique selon la revendication 2 ou 3, caractérisé en ce qu'une surface partielle (56) de la puce CCD d'intensité lumineuse (29) peut être sélectionnée par le microprocesseur (12).

5. Système de mise au point automatique selon la revendication 4, caractérisé en ce que l'excitation de la surface partielle (56) de la puce CCD d'intensité lumineuse (29) s'effectue en synchronisme avec l'excitation des surfaces partielles (54,55) de la double puce CCD (27, 28).

6. Système de mise au point automatique selon l'une quelconque des revendications 2 à 5, caractérisé en ce que plusieurs surfaces partielles (54, 55, 56) qui sont contiguës les unes des autres peuvent être sélectionnées par le microprocesseur (12) pour modifier la grandeur et la conformation du champ de mesure de mise au point automatique (3) et le point de mesure de la mesure de la lumière par spot lumineux.

7. Système de mise au point automatique selon l'une quelconque des revendications 1 à 6, caractérisé en ce qu'il est prévu une matrice à diodes lumineuses (32) qui affiche des un verre dépoli (13) de l'appareil photographique la zone représentant le champ de mesure de mise au point automatique (3) et éventuellement le point de mesure de la mesure de la lumière par spot lumineux.

8. Système de mise au point automatique selon l'une quelconque des revendications 1 à 6, caractérisé en ce qu'il est prévu un système laser qui indique, sur un verre dépoli (13) de l'appareil photographique, la zone du champ d'image qui est mesurée.

9. Système de mise au point automatique selon l'une quelconque des revendications 2 à 8, caractérisé en ce qu'un sélecteur de zone (15) est prévu pour commander le microprocesseur (12), et en ce que le sélecteur de zone (15) est constitué sous forme d'une bille de commande (16) ou d'une manette.

10. Système de mise au point automatique selon la revendication 9, caractérisé en ce qu'un déclencheur (17) de l'appareil photographique est combiné au sélecteur de zone (15) de manière que le réglage du point de netteté, la mesure de la lumière et le déclenchement soient possible au moyen d'un seul doigt et d'un unique mouvement.

11. Système de mise au point automatique selon l'une quelconque des revendications 9 ou 10, caractérisé en ce que le champ de mesure de mise au point automatique (3) en même temps que le point de mesure de la mesure de la lumière par spot lumineux est ramené au centre du champ d'image lors de la mise en service de l'appareil photographique et/ou quand on n'agit plus sur la sélecteur de zone (15).

12. Appareil photographique comprenant un système de mise au point automatique selon l'une quelconque des revendications 1 à 11, caractérisé en ce qu'un miroir basculant semi-transparent (18) est monté à l'avant d'un miroir à réflexion totale (20) dans le couloir à image (22), en ce que le miroir basculant semi-transparent (18) est réfléchissant sur ses deux côtés, et en ce qu'au-dessous du couloir à image (22) est prévu dans le boîtier de l'appareil un miroir (24), l'agencement étant constitué de manière qu'une partie de la lumière qui parvient à travers l'objectif (1) sur le miroir pivotant (18) soit dirigée sur un verre dépoli (19) d'un viseur, et qu'une autre partie de la lumière soit dirigée sur un miroir à réflexion totale (20) situé à l'arrière, d'où elle est renvoyée sur le côté arrière du miroir pivotant (18) et vers le bas dans le boîtier (21) de l'appareil au-dessous du couloir à image (22) et par le miroir (24) vers le triplet de lentilles (25).

13. Appareil photographique selon la revendication 12, caractérisé en ce qu'une lentille de réduction (23) est montée à l'avant du miroir (24).
